# EUROPÄISCHE PATENTSCHRIFT

(11) **EP 3 112 188 B1**
(45) Veröffentlichungstag und Bekanntmachung des Hinweises auf die Patenterteilung: **18.04.2018**
(21) Anmeldenummer: 16156806.8
(22) Anmeldetag: 23.02.2016
(51) Int. Cl.: B60C 11/13, B60C 19/00, B60C 11/04, B60C 11/03

(54) **FAHRZEUGLUFTREIFEN**
PNEUMATIC TYRES FOR A VEHICLE
PNEUMATIQUES DE VÉHICULE

(30) Priorität: 03.07.2015 DE 102015212462
(43) Veröffentlichungstag der Anmeldung: 04.01.2017
(73) Patentinhaber: Continental Reifen Deutschland GmbH, 30165 Hannover (DE)
(72) Erfinder: Özüduru, Ahmet, 30419 Hannover (DE); Kuniak, Lubos, 01863 Ladce (SK); Fischer, Markus, 30823 Garbsen (DE)
(74) Vertreter: Finger, Karsten

(56) Entgegenhaltungen:
- EP-A2- 0 069 464
- EP-A2- 0 216 566
- EP-B1- 2 406 088
- JP-A- 2011 042 365
- KR-A- 20130 057 259
- US-B2- 7 921 891

## Beschreibung

Die Erfindung betrifft einen Fahrzeugluftreifen mit einem Laufstreifen mit in Umfangsrichtung umlaufenden Profilpositiven, beispielsweise Profilblockreihen, welche voneinander durch eine Umfangsrille getrennt sind, wobei die Umfangsrille durch zwei einander gegenüberliegende Rillenflanken und einen Rillengrund begrenzt ist und am Rillengrund eine Anzahl von als Schallbrecher wirkenden Erhebungen über den Umfang des Laufstreifens verteilt ausgebildet ist.

Es ist bekannt, dass sich während des Fahrbetriebes in Umfangsrillen von Laufstreifen von Fahrzeugluftreifen Schallwellen bilden, deren Frequenzen in einem für Menschen wahrnehmbaren Bereich (1000 Hz- Bereich) liegen. Derartige Schallwellen breiten sich entlang der Umfangsrillen meist ungehindert aus, wodurch während des Fahrbetriebes unangenehm wahrnehmbare und störende Fahrgeräusche entstehen. Um dem entgegenzuwirken, können innerhalb der Umfangsrillen aus dem Gummimaterial des Laufstreifens mitgebildete zusätzliche Elemente ("Schallbrecher") angebracht werden, welche die Schallwellen derart stören, dass die Fahrgeräusche reduziert werden.

Ein Reifen eingangs genannter Art ist beispielweise aus der EP 2 406 088 B1 bekannt. Der Laufstreifen dieses Reifens weist Umfangsrillen mit am Rillengrund ausgebildeten Erhebungen auf. Jede Erhebung setzt sich aus wenigstens zwei sich in Umfangsrichtung erstreckenden und in axialer Richtung aneinander angrenzenden Erhebungsabschnitten zusammen. Die Erhebungsabschnitte sind in Form von Abschnitten kreiszylindrischer Mantelflächen ausgebildet und derart angeordnet, dass sie über ihre gesamte Erstreckungslänge einen axialen Abstand zu den Rillenflanken aufweisen, sodass je ein freier Durchgangskanal zwischen den Erhebungen und den benachbarten Rillenflanken vorhanden ist. Gemäß einer alternativen Variante ist einer der äußeren Erhebungsabschnitte über einen kurzen Steg an eine der Rillenflanken angebunden. Fahrzeugluftreifen mit einem Laufstreifen mit derart ausgeführten Erhebungen sollen sowohl ein reduziertes Fahrgeräusch als auch gute Aquaplaningeigenschaften aufweisen. Da die Erhebungen die Querschnittsfläche der Umfangsrille deutlich reduzieren, ist jedoch das Wasserdrainagevermögen der Umfangsrillen begrenzt.

Die JP 2011 042 365 A offenbart einen Schwerlastreifen mit einem Laufstreifen mit in Draufsicht zickzackförmig verlaufenden schulterseitigen Umfangsrillen. In der Mitte jeder schulterseitigen Umfangsrille ist am Rillengrund eine über den gesamten Laufstreifenumfang verlaufende schmale stegartige Erhebungen ausgebildet, welche in radialer Richtung insbesondere am Niveau der Laufstreifenperipherie endet oder dieses Niveau sogar geringfügig überragt. Diese über den Rillenumfang umlaufende Erhebung soll das Fahrgeräusch reduzieren. Aus der US 7 921 891 B2 ist ein für den Off-Road-Einsatz vorgesehener Fahrzeugluftreifen bekannt, dessen Laufstreifen ein Blockprofil aufweist. Am Rillengrund der die Profilblöcke trennenden Rillen sind Erhebungen ausgebildet, welche beim Fahren auf steinigem Untergrund den Rillengrund vor Beschädigungen schützen und ein Einfangen bzw. Verklemmen von Steinen in den Rillen verhindern sollen.

Der Erfindung liegt die Aufgabe zugrunde, die in einem Laufstreifen eines Fahrzeugluftreifens der eingangs genannten Art vorgesehenen, als Schallbrecher dienenden Elemente derart zu gestalten, dass die Nassbrems- und Aquaplaningeigenschaften des Reifens zumindest weitgehend unbeeinträchtigt bleiben.

Die gestellte Aufgabe wird erfindungsgemäß dadurch gelöst, dass jede am Rillengrund vorgesehene Erhebung in Draufsicht sowie in Umfangsrichtung betrachtet S-förmig ausgebildet ist und zwei gebogene Abschnitte aufweist, wobei der eine gebogene Abschnitt eine an der einen Rillenflanke ausgebildete Einbuchtung und der andere gebogene Abschnitt eine an der anderen Rillenflanke ausgebildete Einbuchtung durchläuft. Erfindungsgemäße Erhebungen ermöglichen eine deutliche Reduzierung des Fahrgeräusches, da sie die Ausbreitung von Schallwellen in Umfangsrillen wirkungsvoll behindern. Die Einbuchtungen, in welchen die Erhebungen mit ihren gebogenen Abschnitten verlaufen, bilden eine lokale Verbreiterung der Querschnittsfläche der Umfangsrille, sodass die durch die Erhebungen bedingte Verringerung der Querschnittsfläche ausgeglichen wird, wodurch ein gutes Wasserdrainagevermögen sowie gute Nassbrems- und Aquaplaningeigenschaften ermöglicht sind.

Bei einer bevorzugten Ausfuhrungsform der Erfindung sind die Einbuchtungen innenseitig jeweils durch einen in Draufsicht und bezüglich der Umfangsrille konvex gekrümmten Rillenflankenabschnitt begrenzt, wobei bei einer bevorzugten Ausfuhrungsform der Erfindung die die Einbuchtungen innenseitig begrenzenden gekrümmten Rillenflankenabschnitte in Draufsicht kreisbogenförmig gekrümmt sind. Durch diese Ausführung wird ein verwirbelungsarmes Durchströmen von Wasser durch die Umfangsrille unterstützt.

In diesem Zusammenhang ist es weiter vorteilhaft, wenn die die Einbuchtungen innenseitig begrenzenden gekrümmten Rillenflankenabschnitte in radialer Richtung oder unter einem Winkel von bis zu 10° zur radialen Richtung verlaufen.

Weitere besondere erfindungsgemäße Ausgestaltungen der Einbuchtungen tragen dazu bei die Wasserströmung durch die Umfangsrille zu optimieren. Besonders bevorzugt ist eine Ausführung, bei der die Einbuchtungen jeweils eine maximale Tiefe von 15% bis 30%, insbesondere von 15% bis 25%, der Breite der Umfangsrille aufweisen, wobei die Tiefe und die Breite bezüglich den an der Laufstreifenoberfläche befindlichen Randkanten der Umfangsrille ermittelt sind. Ferner ist es von Vorteil, wenn die Einbuchtungen jeweils eine in Verlängerung der an der Laufstreifenoberfläche befindlichen jeweiligen Randkante der Umfangsrille in Umfangsrichtung ermittelte Erstreckungslänge von 7,5 mm bis 13 mm aufweisen. Die von der S-förmig ausgebildeten Erhebung durchlaufenen Einbuchtungen weisen in Umfangsrichtung zueinander einen Versatz von vorzugsweise 9,5 mm bis 15 mm auf.

Ein guter Kompromiss zwischen guten Aquaplaningeigenschaften und dem Behindern der Ausbreitung von Schallwellen wird dann erreicht, wenn die Erhebungen in radialer Richtung eine Höhe von 1,0 mm bis 2,0 mm, insbesondere von etwa 1,6 mm, aufweisen.

Bei einer bevorzugten Ausführungsform gemäß der Erfindung weist die Erhebung im Bereich zwischen ihren gebogenen Abschnitten ihre maximale Breite welche vorzugsweise 3,0 mm bis 7,0 mm beträgt, auf wodurch die Erhebungen eine gute Stabilität, insbesondere Rissbeständigkeit, aufweisen.

Eine weitere Massnahme, die ein verwirbelungsfreies Durchströmen von Wasser unterstützt besteht darin, dass die Erhebungen im Bereich der Einbuchtungen zu den Rillenflanken verlaufende Übergangsrundungen aufweisen.

Bei einer weiteren bevorzugten Ausführung der Erfindung ist jede Erhebung innerhalb der Umfangsrille durch zwei mittlere Flankenflächen, welche der Einbuchtung jeweils gegenüberliegen, und zwei endseitige Flankenflächen begrenzt, wobei je eine mittlere Flankenfläche mit je einer endseitigen Flankenfläche an der Rillenflanke zusammenläuft. Auch diese Maßnahme trägt zu einer Behinderung der Ausbreitung von Schallwellen in der Umfangsrille bei.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Ausschnitt eines Laufstreifens eines Fahrzeugluftreifens in Schrägansicht mit einer Ausführungsvariante gemäß der Erfindung,
Fig. 2 ein Detail der Fig. 1 in Draufsicht und
Fig. 3 einen Schnitt entlang der Linie III-III der Fig. 2.

Die Erfindung befasst sich mit speziell gestalteten, in Umfangsrillen von Laufstreifen von Fahrzeugluftreifen in Radialbauart, insbesondere von PKW-, Van- oder Light-Truck-Reifen, vorgesehenen Erhebungen 8, welche derart verteilt sind, dass sich im Fahrbetrieb - beim Abrollen des Reifens - zumindest jeweils eine Erhebung 8 im Bereich der Bodenaufstandsfläche befindet. Die in einer Umfangsrille angeordneten Erhebungen weisen insbesondere gegenseitige Abstände von rund 5 cm auf, bei Reifen der Dimension 185R14 beispielsweise 3 cm bis 7 cm, und wirken als "Schallbrecher" zur Reduzierung der Geräuschabstrahlung des Reifens, insbesondere im Bereich um 1000 Hz.

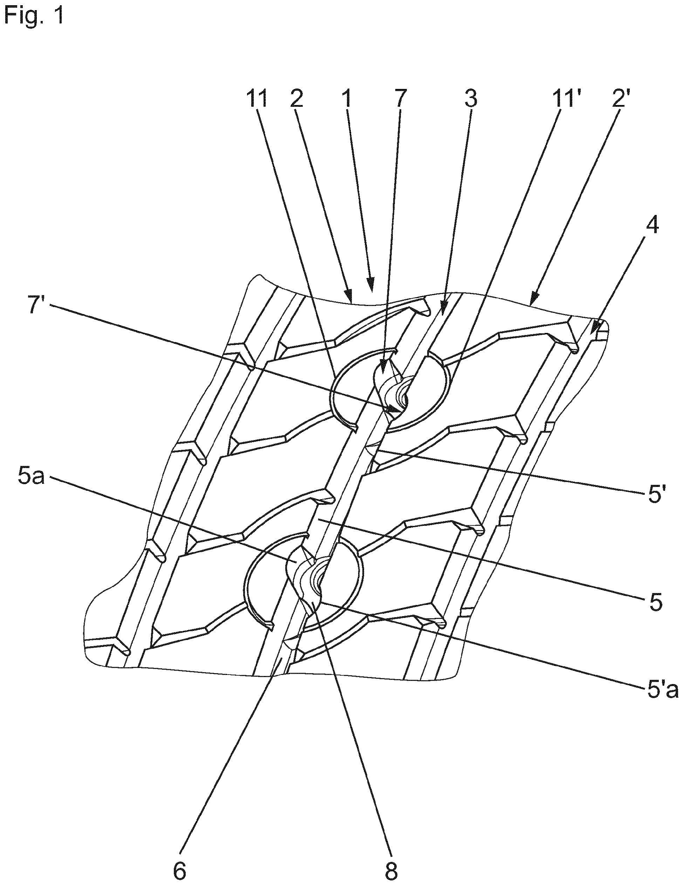

Bei der in Fig. 1 gezeigten Ausführungsvariante ist vom Laufstreifen ein zentraler Laufstreifenbereich 1 dargestellt, welcher zwei im Wesentlichen übereinstimmend ausgeführte in Umfangsrichtung umlaufende Profilblockreihen 2, 2' umfasst, welche durch eine im Bereich des Reifenzenits verlaufende Umfangsrille 3 in axialer Richtung voneinander getrennt sind.

An den zentralen Laufstreifenbereich 1 grenzen weitere Profilbänder oder Profilblockreihen an, von welchen lediglich die axial inneren Bereiche gezeigt sind und welche von den Profilblockreihen 2, 2' jeweils durch eine Umfangsrille 4 getrennt sind.

Die Profilblockreihen 2, 2' sind insbesondere in an sich bekannter Weise strukturiert, wobei abweichend von der gezeigten Ausführungsvariante anstelle der Profilblockreihen 2, 2' auch Profilbänder vorgesehen sein können.

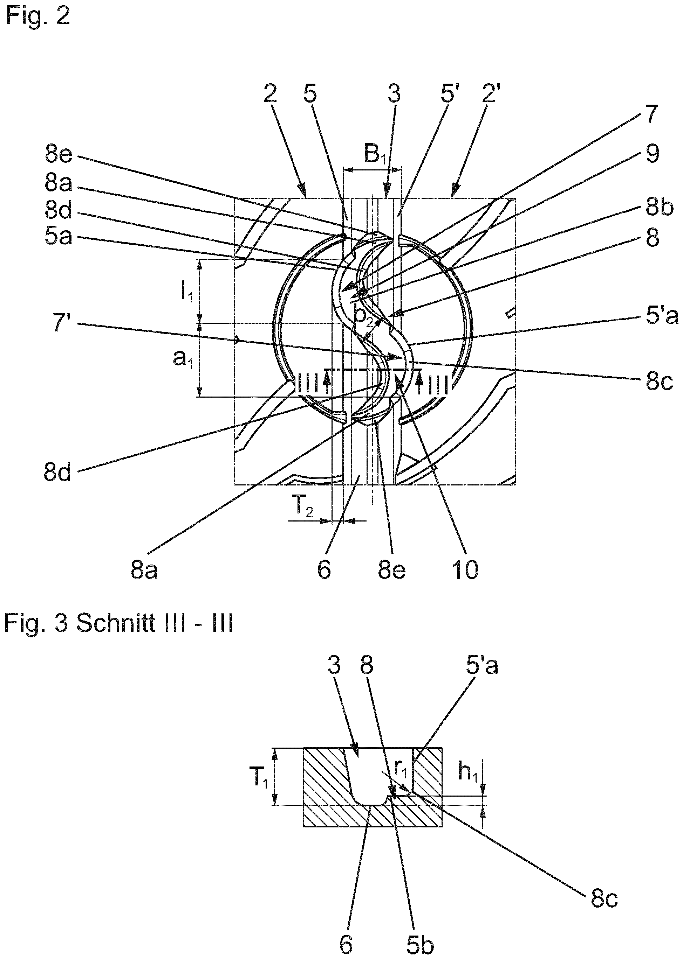

Die Umfangsrille 3 verläuft im Wesentlichen gerade in Umfangsrichtung und ist durch zwei Rillenflanken 5, 5', die gleichermaßen Blockflanken sind, und einen die Rillenflanken 5, 5' verbindenden Rillengrund 6 begrenzt. Die Umfangsrille 3 weist eine in radialer Richtung ermittelte Tiefe T₁ (Fig. 3) auf, welche in Laufstreifen für PKW-Reifen und Commercial-Reifen, Reifen für Transporter und Vans, insbesondere 8,5 mm bis 12,0 mm beträgt, wobei die Tiefe T₁ der für den jeweiligen Fahrzeugluftreifen vorgesehenen maximalen Profiltiefe entspricht. Die Umfangsrille 3 weist in axialer Richtung eine Breite B₁ von 7,5 mm bis 12,0 mm auf, welche zwischen den beiden an der Laufstreifenoberfläche befindlichen Randkanten der Rillenflanken 5, 5' ermittelt wird (Fig. 2).

An den Rillenflanken 5, 5' sind die Umfangsrille 3 lokal verbreiternde, in die Profilblöcke hineinragende Einbuchtungen 7, 7' ausgebildet, wobei je eine Einbuchtung 7 an der Rillenflanke 5 zu einer Einbuchtung 7' an der Rillenflanke 5' gehört, wobei die paarweise einander zugeordneten Einbuchtungen 7, 7' in Umfangsrichtung gegeneinander versetzt sind. Der Versatz a₁, welcher zwischen zwei bezüglich der Umfangsrichtung gleichpositionierten Enden der Einbuchtungen 7, 7' ermittelt wird, beträgt 9,5 mm bis 15,0 mm (Fig. 2). In die paarweise angeordneten Einbuchten 7, 7' verläuft eine in Draufsicht S-förmig ausgebildete Erhebung 8 hinein, welche sich ansonsten Großteils entlang des Rillengrundes 6 erstreckt.

Die Einbuchtungen 7, 7' sind innenseitig durch einen zur jeweiligen Rillenflanke 5, 5' gehörenden Rillenflankenabschnitt 5a, 5'a begrenzt, welcher in Draufsicht bezüglich der Umfangsrille 3 konvex gekrümmt ist. Bei der in Fig. 2 gezeigten Ausführungsvariante sind die Rillenflankenabschnitte 5a, 5'a in Draufsicht kreisbogenförmig gekrümmt ausgebildet und erstrecken sich zumindest im Wesentlichen in radialer Richtung (Fig. 3), können jedoch auch unter einem spitzen Winkel von bis zu 10° zur radialen Richtung verlaufen.

Jede Einbuchtung 7, 7' weist bezogen auf eine Linie in Verlängerung der an der Laufstreifenoberfläche befindlichen jeweiligen Randkante der Umfangsrille 3, eine in axialer Richtung ermittelte maximale Tiefe T₂ von 15% bis 30%, insbesondere von 15% bis 25%, der Breite B₁ der Umfangsrille 3 auf. Ferner weist jede Einbuchtung 7, 7' eine an der Laufstreifenoberfläche in Verlängerung der jeweiligen Randkante der Umfangsrille 3 ermittelte Erstreckungslänge l₁ von 7,5 mm bis 13,0 mm, auf.

Die S-förmig ausgebildete Erhebung 8 weist zwei an die gebogene Form der Innenseiten der Einbuchtungen 7, 7' angepasste gebogene Abschnitte 9, 10 auf, wobei vorzugsweise die beiden Abschnitte 9, 10 übereinstimmend ausgeführt sind und jeweils eine Hälfte der Erhebung 8 bilden. Der Abschnitt 9 verläuft durch die Einbuchtung 7, der Abschnitt 10 durch die Einbuchtung 7'. An der der jeweiligen Einbuchtung 7, 7' gegenüberliegenden Rillenflanke 5, 5' weist jeder Abschnitt 9, 10 einen spitz zusammenlaufenden Endabschnitt 8a auf. Im Bereich zwischen den Einbuchtungen 7, 7' weist die Erhebung 8 ihre maximale Breite b₂ auf, welche im Wesentlichen orthogonal zur Erstreckung der Erhebung 8 ermittelt wird und 3,0 mm bis 7,0 mm beträgt.

Die Erhebung 8 weist in radialer Richtung eine Höhe h₁ (Fig. 3) von 1,0 mm bis 2,0 mm, insbesondere von etwa 1,6 mm auf, und ist durch eine im Wesentlichen parallel zur Laufstreifenoberfläche verlaufende Deckfläche 8b begrenzt. Im Bereich der Einbuchtungen 7, 7' weist die Erhebung 8 jeweils eine von ihrer Deckfläche 8b zum jeweiligen Rillenflankenabschnitt 5a, 5'a verlaufende Übergangsrundung 8c auf, welche im Querschnitt betrachtet entlang eines Kreisbogens mit einem Radius r₁ von etwa 1,5 mm gerundet ausgeführt ist (Fig. 3).

Gemäß Fig. 2 ist die Erhebung 8 innerhalb der Umfangsrille 3 durch zwei den Einbuchtungen 7, 7' gegenüberliegenden, mittleren Flankenflächen 8d und zwei endseitigen Flankenflächen 8e begrenzt, wobei je eine Flankenfläche 8d mit einer Flankenfläche 8e am spitz zusammenlaufenden Endabschnitt 8a zusammenläuft. Die Flankenflächen 8d, 8e verlaufen vorzugsweise entweder unter einem kleinen spitzen Winkel zur radialen Richtung oder entlang eines kleinen Radius gerundet.

Bei der gezeigten Ausführungsvariante sind im Bereich jeder Erhebung 8 in den Profilblockreihen 2, 2' kreisbogenförmige, an ihren Enden in die Umfangsrille 3 einmündende schmale Nuten 11, 11' mit einer in radialer Richtung ermittelten Tiefe von höchstens 2,0 mm vorgesehen, die insgesamt einen Kreis bilden, sodass die Nuten 11, 11' gemeinsam mit einer Erhebung 8 ein "S in einem Kreis" andeuten (Fig. 1).

Die Einbuchtungen 7, 7' und die Erhebungen 8 können in beliebigen Umfangsrillen eines Laufstreifens vorgesehen sein.

### Bezugsziffernliste

- 1: zentraler Laufstreifenbereich
- 2, 2': Profilblockreihe
- 3: Umfangsrille
- 4: Umfangsrille
- 5, 5': Rillenflanke
- 5a, 5'a: Rillenflankenabschnitt
- 6: Rillengrund
- 7: Einbuchtung
- 8: Erhebung
- 8a: Endabschnitt
- 8b: Deckfläche
- 8c: Übergangsrundung
- 8d, 8e: Flankenflächen
- 9, 10: gebogener Abschnitt
- 11, 11': Nut
- a₁: Versatz
- B₁: Breite der Umfangsrille
- b₁: Breite der Einbuchtung
- b₂: Breite der Erhebung
- h₁: Höhe der Erhebung
- l₁: Länge der Einbuchtung
- T₁: Tiefe der Umfangsrille
- r₁: Radius

## Patentansprüche

1. Fahrzeugluftreifen mit einem Laufstreifen mit in Umfangsrichtung umlaufenden Profilpositiven (2, 2'), beispielsweise Profilblockreihen, welche voneinander durch eine Umfangsrille (3) getrennt sind, wobei die Umfangsrille (3) durch zwei einander gegenüberliegende Rillenflanken (5, 5') und einen Rillengrund (6) begrenzt ist und am Rillengrund (6) als Schallbrecher wirkende Erhebungen (8) ausgebildet sind, **dadurch gekennzeichnet, dass** die Erhebungen (8) derart über den Umfang des Laufstreifens verteilt sind, dass sich im Fahrbetrieb - beim Abrollen des Reifens - zumindestens jeweils eine Erhebung (8) im Bereich der Bodenaufstandsfläche befindet, wobei jede am Rillengrund (6) vorgesehene Erhebung (8) in Draufsicht sowie in Umfangsrichtung betrachtet S-förmig ausgebildet ist und zwei gebogene Abschnitte (9, 10) aufweist, wobei der eine gebogene Abschnitt (9) eine an der einen Rillenflanke (5) ausgebildete Einbuchtung (7) und der andere gebogene Abschnitt (10) eine an der anderen Rillenflanke (5') ausgebildete Einbuchtung (7') durchläuft.

2. Fahrzeugluftreifen nach Anspruch 1, **dadurch gekennzeichnet, dass** die Einbuchtungen (7, 7') innenseitig jeweils durch einen in Draufsicht und bezüglich der Umfangsrille (3) konvex gekrümmten Rillenflankenabschnitt (5a, 5'a) begrenzt sind.

3. Fahrzeugluftreifen nach Anspruch 2, **dadurch gekennzeichnet, dass** die gekrümmten Rillenflankenabschnitte (5a, 5'a), welche die Einbuchtungen (7, 7') innenseitig begrenzen, in radialer Richtung oder unter einem Winkel von bis zu 10° zur radialen Richtung verlaufen.

4. Fahrzeugluftreifen nach Anspruch 2 oder 3, **dadurch gekennzeichnet, dass** die gekrümmten Rillenflankenabschnitte (5a, 5'a), welche die Einbuchtungen (7, 7') innenseitig begrenzen, in Draufsicht kreisbogenförmig gekrümmt sind.

5. Fahrzeugluftreifen nach einem der Ansprüche 1 bis 4, **dadurch gekennzeichnet, dass** die Einbuchtungen (7, 7') jeweils eine maximale Tiefe (T₂) von 15% bis 30%, insbesondere von 15% bis 25%, der Breite (B₁) der Umfangsrille (3) aufweisen, wobei die Tiefe (T₂) und die Breite (B₁) bezüglich den an der Laufstreifenoberfläche befindlichen Randkanten der Umfangsrille (3) ermittelt sind.

6. Fahrzeugluftreifen nach einem der Ansprüche 1 bis 5, **dadurch gekennzeichnet, dass** die Einbuchtungen (7, 7') jeweils eine in Verlängerung der an der Laufstreifenoberfläche befindlichen jeweiligen Randkante der Umfangsrille (3) in Umfangsrichtung ermittelte Erstreckungslänge (l₁) von 7,5 mm bis 13 mm aufweisen.

7. Fahrzeugluftreifen nach einem der Ansprüche 1 bis 6, **dadurch gekennzeichnet, dass** die von der S-förmig ausgebildeten Erhebung (8) durchlaufenen Einbuchtungen (7, 7') in Umfangsrichtung zueinander einen Versatz (a₁) von 9,5 mm bis 15 mm aufweisen.

8. Fahrzeugluftreifen nach einem der Ansprüche 1 bis 7, **dadurch gekennzeichnet, dass** die Erhebung (8) in radialer Richtung eine Höhe (h₁) von 1,0 mm bis 2,0 mm, insbesondere von etwa 1,6 mm, aufweist.

9. Fahrzeugluftreifen nach einem der Ansprüche 1 bis 8, **dadurch gekennzeichnet, dass** die Erhebung (8) im Bereich zwischen ihren gebogenen Abschnitten (9, 10) ihre maximale Breite (b₂) aufweist.

10. Fahrzeugluftreifen nach Anspruch 9, **dadurch gekennzeichnet, dass** die maximale Breite (b₂) 3,0 mm bis 7,0 mm beträgt.

11. Fahrzeugluftreifen nach einem der Ansprüche 1 bis 10, **dadurch gekennzeichnet, dass** die Erhebungen (8) im Bereich der Einbuchtungen (7, 7') zu den Rillenflanken (5, 5') verlaufende Übergangsrundungen (8c) aufweisen.

12. Fahrzeugluftreifen nach einem der Ansprüche 1 bis 11, **dadurch gekennzeichnet, dass** jede Erhebung (8) innerhalb der Umfangsrille (3) durch zwei mittlere Flankenflächen (8d), welche der Einbuchtung (7, 7') jeweils gegenüberliegen, und zwei endseitige Flankenflächen (8e) begrenzt ist, wobei je eine mittlere Flankenfläche (8d) mit je einer endseitigen Flankenfläche (8e) an der Rillenflanke (5, 5') zusammenläuft.

## Claims

1. Pneumatic vehicle tyre with a tread and with profile positives (2, 2') running around in the circumferential direction, for example rows of profile blocks that are separated from one another by a circumferential groove (3), the circumferential groove (3) being delimited by two flanks (5, 5') lying opposite one another and a groove base (6), and elevations (8) that act as sound absorbers being formed on the groove base (6), **characterized in that** the elevations (8) are distributed over the circumference of the tread in such a way that, during driving - when the tyre is rolling along - there is at least one elevation (8) in each case in the region of the ground contact area, each elevation (8) that is provided on the groove base (6) being of an S-shaped form when viewed from above and in the circumferential direction and having two arcuate portions (9, 10), the one arcuate portion (9) running through an indentation (7) formed on the one groove flank (5) and the other arcuate portion (10) running through an indentation (7') formed on the other groove flank (5').

2. Pneumatic vehicle tyre according to Claim 1, **characterized in that** the indentations (7, 7') are delimited on the inner side in each case by a groove flank portion (5a, 5'a) that is convexly curved from above and with respect to the circumferential groove (3).

3. Pneumatic vehicle tyre according to Claim 2, **characterized in that** the curved groove flank portions (5a, 5'a) that delimit the indentations (7, 7') on the inside run in the radial direction or at an angle of up to 10° in relation to the radial direction.

4. Pneumatic vehicle tyre according to Claim 2 or 3, **characterized in that** the curved groove flank portions (5a, 5'a) that delimit the indentations (7, 7') on the inside are curved in the form of circular arcs from above.

5. Pneumatic vehicle tyre according to one of Claims 1 to 4, **characterized in that** the indentations (7, 7') have in each case a maximum depth (T₂) of 15% to 30%, in particular of 15% to 25%, of the width (B₁) of the circumferential groove (3), the depth (T₂) and the width (B₁) being determined with respect to the peripheral edges of the circumferential groove (3) that are located at the surface of the tread.

6. Pneumatic vehicle tyre according to one of Claims 1 to 5, **characterized in that** the indentations (7, 7') have in each case a length of extent (l₁), determined as an extension of the respective peripheral edge of the circumferential groove (3) located at the surface of the tread in the longitudinal direction, of 7.5 mm to 13 mm.

7. Pneumatic vehicle tyre according to one of Claims 1 to 6, **characterized in that** the indentations (7, 7') that are run through by the elevation (8) of an S-shaped form have an offset (a₁) in relation to one another in the circumferential direction of 9.5 mm to 15 mm.

8. Pneumatic vehicle tyre according to one of Claims 1 to 7, **characterized in that** the elevation (8) has in the radial direction a height (h₁) of 1.0 mm to 2.0 mm, in particular of approximately 1.6 mm.

9. Pneumatic vehicle tyre according to one of Claims 1 to 8, **characterized in that** the elevation (8) has its maximum width (b₂) in the region between its arcuate portions (9, 10).

10. Pneumatic vehicle tyre according to Claim 9, **characterized in that** the maximum width (b₂) is 3.0 mm to 7.0 mm.

11. Pneumatic vehicle tyre according to one of Claims 1 to 10, **characterized in that** the elevations (8) have in the region of the indentations (7, 7') transitional rounded portions (8c) running to the groove flanks (5, 5').

12. Pneumatic vehicle tyre according to one of Claims 1 to 11, **characterized in that** each elevation (8) within the circumferential groove (3) is delimited by two middle flank faces (8d), which respectively lie opposite the indentation (7, 7'), and two end flank faces (8e), a middle flank face (8d) respectively converging with an end flank face (8e) respectively at the groove flank (5, 5').

## Revendications

1. Bandage pneumatique pour roue de véhicule présentant une bande de roulement dotée de profilés positifs (2, 2') s'étendant dans la direction périphérique, par exemple des rangées de blocs profilés séparées les unes des autres par une rainure périphérique (3), la rainure périphérique (3) étant délimitée par deux flancs (5, 5') de rainure mutuellement opposés et un fond de rainure (6), des rehaussements (8) agissant comme dispositifs de réfraction du bruit étant formés sur le fond (6) de la rainure,
**caractérisé en ce que**
les rehaussements (8) sont répartis à la périphérie de la bande de roulement de telle sorte qu'en conditions de roulage, lorsque le bandage de roue roule, au moins un relief (8) est présent en permanence sur la surface d'appui au sol,
**en ce que** chaque rehaussement (8) prévu sur le fond (6) de la rainure est configuré en S aussi bien dans une vue en plan que dans la direction périphérique et présente deux parties courbes (9, 10) dont l'une (9) traverse une entaille (7) formée sur le flanc (5) de la rainure et l'autre (10) traverse une entaille (7') formée sur l'autre flanc (5') de la rainure.

2. Bandage pneumatique pour roue de véhicule selon la revendication 1, **caractérisé en ce que** les entailles (7, 7') sont délimitées du côté intérieur par une section (5a, 5'a) de flanc de rainure à courbure convexe dans une vue en plan et par rapport à la rainure périphérique (3).

3. Bandage pneumatique pour roue de véhicule selon la revendication 2, **caractérisé en ce que** les parties courbes (5a, 5'a) de flanc de rainure qui délimitent les entailles (7, 7') du côté intérieur s'étendent dans la direction radiale ou forment par rapport à la direction radiale un angle pouvant atteindre 10°.

4. Bandage pneumatique pour roue de véhicule selon les revendications 2 ou 3, **caractérisé en ce que** les parties courbes (5a, 5'a) de flanc de rainure qui délimitent les entailles (7, 7') du côté intérieur présentent vues en plan une courbure en arc de cercle.

5. Bandage pneumatique pour roue de véhicule selon l'une des revendications 1 à 4, **caractérisé en ce que** les entailles (7, 7') présentent chacune une profondeur maximale (T₂) qui représente de 15 % à 30 % et en particulier de 15 % à 25 % de la largeur (B₁) de la rainure périphérique (3), la profondeur (T₂) et la largeur (B₁) étant déterminées par rapport aux bordures de la rainure périphérique (3) situées sur la surface de la bande de roulement.

6. Bandage pneumatique pour roue de véhicule selon l'une des revendications 1 à 5, **caractérisé en ce que** chacune des entailles (7, 7') présente dans le prolongement de la bordure de la rainure périphérique (3) située sur la surface de la bande de roulement une extension, déterminée dans la direction périphérique, (l₁) de 7,5 mm à 13 mm.

7. Bandage pneumatique pour roue de véhicule selon l'une des revendications 1 à 6, **caractérisé en ce que** les entailles (7, 7') traversées par le rehaussement (8) configuré en forme de S présentent dans la direction périphérique un décalage mutuel (a₁) de 9,5 mm à 15 mm.

8. Bandage pneumatique pour roue de véhicule selon l'une des revendications 1 à 7, **caractérisé en ce que** le rehaussement (8) présente dans la direction radiale une hauteur (h₁) de 1,0 mm à 2,0 mm et en particulier d'environ 1,6 mm.

9. Bandage pneumatique pour roue de véhicule selon l'une des revendications 1 à 8, **caractérisé en ce que** le rehaussement (8) présente sa largeur maximale (b₂) au niveau situé entre ses parties cintrées (9, 10).

10. Bandage pneumatique pour roue de véhicule selon la revendication 9, **caractérisé en ce que** la largeur maximale (b₂) est de 3,0 mm à 7,0 mm.

11. Bandage pneumatique pour roue de véhicule selon l'une des revendications 1 à 10, **caractérisé en ce que** les rehaussements (8) présentent des arrondis de transition (8c) qui s'étendent en direction des flancs (5, 5') de la rainure au niveau des entailles (7, 7').

12. Bandage pneumatique pour roue de véhicule selon l'une des revendications 1 à 11, **caractérisé en ce que** chaque rehaussement (8) situé à l'intérieur de la rainure périphérique (3) est délimité par deux surfaces centrales de flanc (8d) qui font face à chaque entaille (7, 7') et deux surfaces terminales de flanc (8e), une surface centrale de flanc (8d) coïncidant avec une surface terminale de flanc (8e) sur le flanc (5, 5') de la rainure.
